# EUROPEAN PATENT APPLICATION

(11) **EP 4 071 906 A1**
(43) Date of publication of application: **12.10.2022**
(21) Application number: 22165197.9
(22) Date of filing: 29.03.2022
(51) Int. Cl.: H01M 50/211, H01M 50/242, H01M 50/249, H01M 50/105, H01M 50/55

(54) **POWER STORAGE**

(30) Priority: 31.03.2021 JP 2021060831
(71) Applicant: TOYOTA JIDOSHA KABUSHIKI KAISHA, Toyota-shi, Aichi-ken, 471-8571 (JP)
(72) Inventor: KATO, Masashi, Toyota-shi, 471-8571 (JP)
(74) Representative: D Young & Co LLP

(57) **Abstract**

A power storage (100) includes a power storage module (20) in which power storage cells are stacked in a direction of stack and a casing (10) in which the power storage module (20) is accommodated. Each of the power storage cells includes an electrode assembly, an exterior film (36) with which the electrode assembly is sealed, and a positive electrode lead (37) and a negative electrode lead (38) that are connected to the electrode assembly and protrude from the exterior film (36). The exterior film (36) includes an expansion portion on the outside of the electrode assembly in a direction different from a direction of protrusion of the positive electrode lead (37) and the negative electrode lead (38) from the exterior film (36), the expansion portion being expandable when gas is generated in inside of the exterior film. An expansion allowable space S where expansion of the expansion portion is allowed is provided between the casing (10) and the power storage module (20).

## Description

This nonprovisional application is based on Japanese Patent Application No. 2021-060831 filed with the Japan Patent Office on March 31, 2021, the entire contents of which are hereby incorporated by reference.

### BACKGROUND

### Field

The present disclosure relates to a power storage and particularly to a power storage mounted on a vehicle.

### Description of the Background Art

Japanese Patent Laying-Open No. 2012-221730 discloses as a conventional power storage, a battery assembly made by accommodating a battery module implemented by stacked laminate-type batteries in a case, the battery assembly being constructed such that a pressurization member that externally presses ends of the laminate-type batteries is arranged. The pressurization member presses an excess electrolyte solution contained in the laminate-type batteries to supply the electrolyte solution to an unimpregnated portion of an electrode assembly that is not impregnated with the electrolyte solution.

### SUMMARY

In the power storage disclosed in Japanese Patent Laying-Open No. 2012-221730, a cut portion is provided in the pressurization member that circumferentially surrounds an outer periphery of the laminate-type battery. Then, when gas is generated in the laminate-type battery, this gas can move to a portion corresponding to the cut portion in the laminate-type battery.

A reservoir where generated gas is stored is not provided in a laminate film itself with which the electrode assembly is sealed. Therefore, when a considerable amount of gas is generated, break of the laminate film is a concern.

The present disclosure was made in view of problems as above, and an object of the present disclosure is to provide a power storage capable of achieving suppression of break of an exterior film with which an electrode assembly is sealed.

A power storage based on the present disclosure includes a power storage module in which power storage cells are stacked in a direction of stack and a casing in which the power storage module is accommodated. Each of the power storage cells includes an electrode assembly, an exterior film with which the electrode assembly is sealed, and a positive electrode lead and a negative electrode lead that are connected to the electrode assembly and protrude from the exterior film. The exterior film includes an expansion portion on the outside of the electrode assembly in a direction different from a direction of protrusion of the positive electrode lead and the negative electrode lead from the exterior film, the expansion portion being expandable when gas is generated in inside of the exterior film. An expansion allowable space where expansion of the expansion portion is allowed is provided between the casing and the power storage module.

According to the construction, the exterior film is provided with the expansion portion. Therefore, when a considerable amount of gas is generated in the inside of the exterior film, gas is stored in the expansion portion and the expansion portion expands. In this case, by providing the expansion allowable space where expansion of the expansion portion is allowed between the casing and the power storage module, interference between the casing and the expansion portion can be suppressed. Consequently, application of an excessive pressure from the outside to the expansion portion is suppressed, and break of the exterior film can be suppressed.

In the power storage based on the present disclosure, the exterior film is in a rectangular shape including a long side portion and a short side portion in a plan view. In this case, the positive electrode lead and the negative electrode lead may protrude from the short side portion along a longitudinal direction of the exterior film. Furthermore, in this case, preferably, the expansion portion is provided on the outside of the electrode assembly in a short-side direction of the exterior film and the expansion allowable space is located on the outside of the electrode assembly in the short-side direction in the plan view.

According to the construction, the expansion portion is provided on the outside of the electrode assembly in the short-side direction of the electrode assembly. Therefore, the expansion portion can be formed along the longitudinal direction. A large area of the expansion portion can thus be secured, and when gas is generated, a large amount of gas can be stored in the expansion portion. Furthermore, the expansion portion is also provided on the outside of the electrode assembly in the short-side direction of the electrode assembly, so that a large expansion allowable space can be secured. Consequently, even when the expansion portion expands, interference between the casing and the expansion portion can be suppressed, and break of the exterior film can be suppressed.

In the power storage based on the present disclosure, the power storage module includes a positive electrode terminal portion implemented by any of positive electrode leads included in the power storage cells and a negative electrode terminal portion implemented by any of negative electrode leads included in the power storage cells. The power storage further includes a positive electrode external terminal portion and a negative electrode external terminal portion provided outside the casing and a first conductive member and a second conductive member, the first conductive member connecting the positive electrode external terminal portion and the positive electrode terminal portion to each other, the second conductive member connecting the negative electrode external terminal portion and the negative electrode terminal portion to each other. In this case, preferably, the first conductive member and the second conductive member are provided not to enter the expansion allowable space.

According to the construction, interference between the first and second conductive members and the expansion portion at the time of expansion of the expansion portion can be suppressed. Consequently, break of the exterior film can further be suppressed.

In the power storage based on the present disclosure, the expansion portion is formed by folding back an excess portion of the exterior film.

According to the construction, the construction of the expansion portion can be simplified.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic plan view of a power storage according to an embodiment.
Fig. 2 is a schematic cross-sectional view along the line II-II shown in Fig. 1.
Fig. 3 is a schematic cross-sectional view along the line III-III shown in Fig. 1.
Fig. 4 is a schematic cross-sectional view along the line IV-IV shown in Fig. 1.
Fig. 5 is a schematic cross-sectional view showing a state in which an expansion portion expands in the power storage according to the embodiment.

### DESCRIPTION OF THE PREFERRED EMBODIMENTS

An embodiment of the present disclosure will be described in detail below with reference to the drawings. The same elements or elements in common in the embodiment shown below have the same reference characters allotted in the drawings and description thereof will not be repeated.

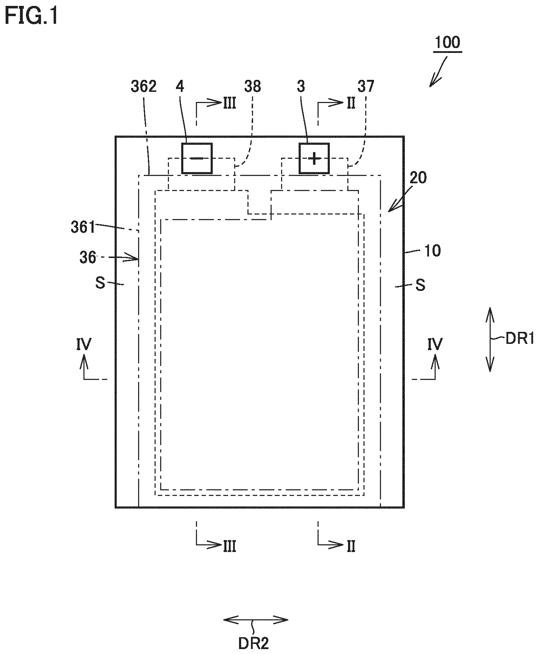

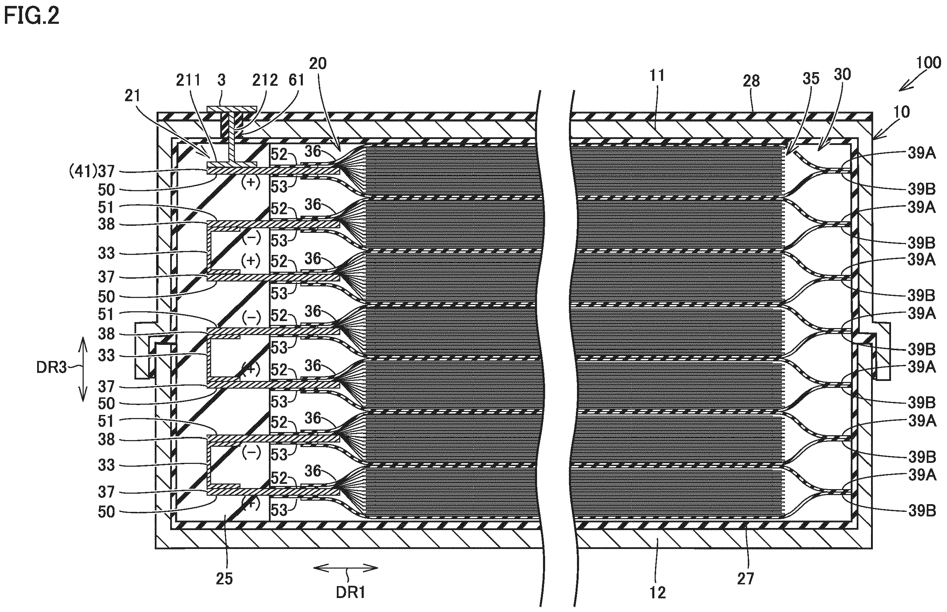

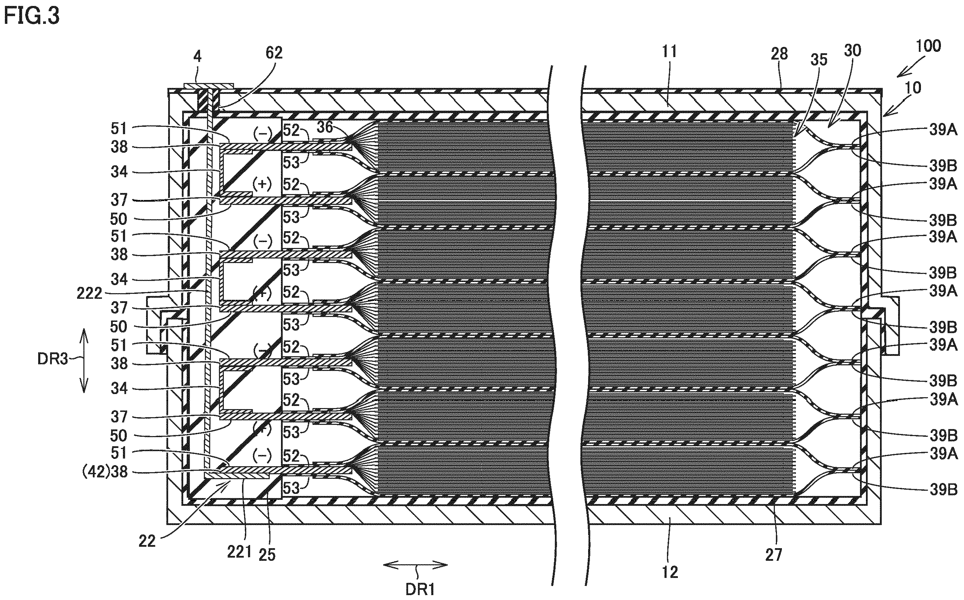

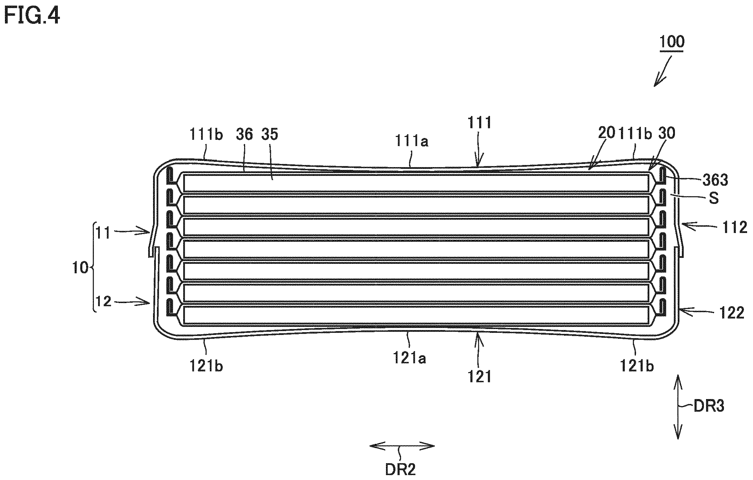

Fig. 1 is a schematic plan view of a power storage according to an embodiment. Fig. 2 is a schematic cross-sectional view along the line II-II shown in Fig. 1. Fig. 3 is a schematic cross-sectional view along the line III-III shown in Fig. 1. Fig. 4 is a schematic cross-sectional view along the line IV-IV shown in Fig. 1. A power storage 100 according to the embodiment will be described with reference to Figs. 1 to 4.

Power storage 100 according to the present embodiment is mounted on a vehicle. The vehicle is a hybrid vehicle that can travel with motive power from at least one of a motor and an engine or an electrically powered vehicle that travels with driving force obtained from electric energy.

As shown in Fig. 1, power storage 100 includes a casing 10, a power storage module 20, a positive electrode external terminal portion 3, and a negative electrode external terminal portion 4.

Positive electrode external terminal portion 3 and negative electrode external terminal portion 4 are provided on the outside of casing 10. More specifically, positive electrode external terminal portion 3 and negative electrode external terminal portion 4 are provided on an upper surface of casing 10. Positive electrode external terminal portion 3 and negative electrode external terminal portion 4 are arranged at a distance in a short-side direction DR2.

Casing 10 is substantially in a shape of a parallelepiped. Casing 10 is provided to extend along a longitudinal direction DR1. Power storage module 20 is accommodated in casing 10. Casing 10 includes an upper case 11 (see Figs. 2 and 3) and a lower case 12 (see Figs. 2 and 3). Upper case 11 is substantially in a box shape that opens downward. Lower case 12 is substantially in a box shape that opens upward.

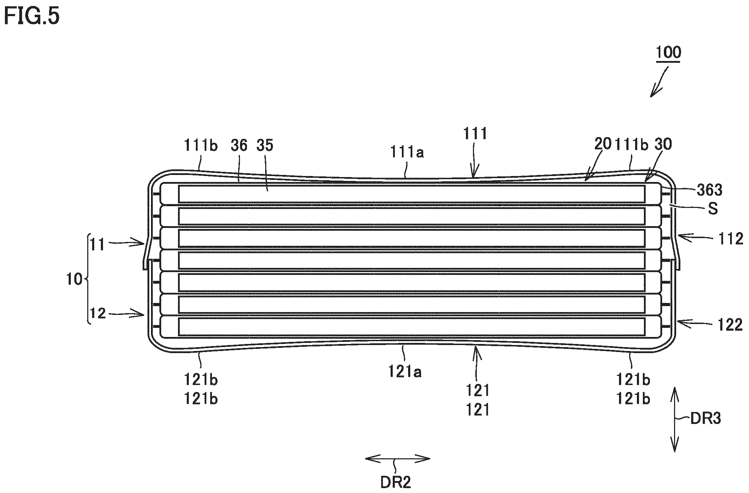

Though Figs. 2 and 3 illustrate a flat upper wall portion of upper case 11 and a flat bottom wall portion of the lower case for the sake of convenience, specifically, they are recessed such that respective central portions are closer to power storage module 20 as shown in Figs. 4 and 5.

As shown in Figs. 2 and 3, power storage module 20 includes power storage cells 30 and connection members (bus bars) 33 and 34. Power storage cells 30 are stacked in a direction of stack DR3. Direction of stack DR3 is in parallel to a vertical direction.

Each of power storage cells 30 includes an electrode assembly 35, an exterior film 36, a positive electrode current collection plate 37 as a positive electrode lead, and a negative electrode current collection plate 38 as a negative electrode lead.

Exterior film 36 is formed from an aluminum laminate film or the like. Electrode assembly 35 and a not-shown electrolyte solution are accommodated in the inside of exterior film 36. Exterior film 36 is substantially in a rectangular shape in the plan view and includes a pair of long side portions 361 (see Fig. 1) and a pair of short side portions 362 (see Fig. 1).

The pair of long side portions 361 extends along longitudinal direction DR1 and is aligned in short-side direction DR2. The pair of short side portions 362 extends along short-side direction DR2 and is aligned in longitudinal direction DR1.

Exterior film 36 includes an upper film 39A and a lower film 39B. Upper film 39A is arranged to cover electrode assembly 35 from above and lower film 39B is provided to cover electrode assembly 35 from below.

An outer peripheral portion of upper film 39A and an outer peripheral portion of lower film 39B are bonded to each other by a not-shown adhesive.

Electrode assembly 35 is formed into a shape of a parallelepiped. Electrode assembly 35 includes positive electrode sheets, separators, and negative electrode sheets stacked in direction of stack DR3. The separator is arranged between the positive electrode sheet and the negative electrode sheet.

A part of an aluminum foil that forms the positive electrode sheet is drawn to one side surface (one side in longitudinal direction DR1) of electrode assembly 35 and a part of a copper foil that forms the negative electrode sheet is drawn to one side surface (one side in longitudinal direction DR1) of electrode assembly 35. The part of the aluminum foil and the part of the copper foil drawn to one side surface of electrode assembly 35 are arranged at a distance in short-side direction DR2.

Positive electrode current collection plate 37 is formed of aluminum or the like. Positive electrode current collection plate 37 is arranged on one side surface (one side in longitudinal direction DR1). Aluminum foils that form the positive electrode sheet are welded to positive electrode current collection plate 37. Positive electrode current collection plate 37 is thus connected to electrode assembly 35.

An adhesive 52 is formed on an upper surface of positive electrode current collection plate 37 and bonds upper film 39A and positive electrode current collection plate 37 with each other. An adhesive 53 is formed on a lower surface of positive electrode current collection plate 37 and bonds lower film 39B and positive electrode current collection plate 37 with each other. Adhesives 52 and 53 extend to the outside of exterior film 36 in longitudinal direction DR1.

Positive electrode current collection plate 37 protrudes outward from short side portion 362 of exterior film 36 along longitudinal direction DR1. More specifically, positive electrode current collection plate 37 protrudes outward relative to exterior film 36 and adhesives 52 and 53 on one side in longitudinal direction DR1. Positive electrode current collection plate 37 includes an exposed portion 50 exposed through exterior film 36 and adhesives 52 and 53.

Negative electrode current collection plate 38 is formed of copper or the like. Negative electrode current collection plate 38 is arranged on the one side surface (one side in longitudinal direction DR1). Copper foils that form the negative electrode sheet are welded to negative electrode current collection plate 38. Negative electrode current collection plate 38 is thus connected to electrode assembly 35.

Adhesive 52 is formed on an upper surface of negative electrode current collection plate 38 and bonds negative electrode current collection plate 38 and upper film 39A with each other. Adhesive 53 is formed on a lower surface of negative electrode current collection plate 38 and bonds negative electrode current collection plate 38 and lower film 39B with each other. Adhesives 52 and 53 extend to the outside of exterior film 36 in longitudinal direction DR1.

Negative electrode current collection plate 38 protrudes outward from short side portion 362 of exterior film 36 along longitudinal direction DR1. More specifically, negative electrode current collection plate 38 protrudes outward relative to exterior film 36 and adhesives 52 and 53 on one side in longitudinal direction DR1. Negative electrode current collection plate 38 includes an exposed portion 51 exposed through exterior film 36 and adhesives 52 and 53.

Power storage cells 30 are stacked such that positive electrode current collection plate 37 and negative electrode current collection plate 38 are alternately aligned in the direction of stack. Power storage cells 30 adjacent in the direction of stack are arranged such that one is inverse in vertical orientation to the other.

As shown in Fig. 2, each of connection members 33 connects exposed portion 51 of negative electrode current collection plate 38 and exposed portion 50 of positive electrode current collection plate 37 to each other on one side in short-side direction DR2 shown in Fig. 1. Specifically, each of connection members 33 connects a lower surface of negative electrode current collection plate 38 and an upper surface of positive electrode current collection plate 37 to each other.

As shown in Fig. 3, each of connection members 34 connects exposed portion 51 of negative electrode current collection plate 38 and exposed portion 50 of positive electrode current collection plate 37 to each other on the other side in short-side direction DR2 shown in Fig. 1. Specifically, each of connection members 34 connects the lower surface of negative electrode current collection plate 38 and the upper surface of positive electrode current collection plate 37 to each other.

Power storage cells 30 are thus connected in series through connection members 33 and 34.

Positive electrode current collection plate 37 included in power storage cell 30 located at an uppermost position among power storage cells 30 functions as a positive electrode terminal portion 41 of power storage module 20. Negative electrode current collection plate 38 included in power storage cell 30 located at a lowermost position among power storage cells 30 functions as a negative electrode terminal portion 42 of power storage module 20.

Power storage 100 further includes a first conductive member 21, a second conductive member 22, an insulating member 25, and insulating films 27 and 28.

Positive electrode terminal portion 41 and positive electrode external terminal portion 3 are connected to each other through first conductive member 21. First conductive member 21 is provided not to enter an expansion allowable space which will be described later. More specifically, first conductive member 21 is provided on the outside of exterior film 36 on one side in longitudinal direction DR1.

First conductive member 21 includes a first portion 211 and a second portion 212. First portion 211 is substantially in a shape of a plate and welded to an upper surface of positive electrode terminal portion 41. Second portion 212 is provided to extend upward. A tip end side of second portion 212 passes through upper case 11 of casing 10 and is connected to positive electrode external terminal portion 3.

First conductive member 21 and casing 10 are isolated from each other by insulating film 27 provided on an inner surface of casing 10, an insulating member 61 provided around a part of second portion 212 that passes through upper case 11, and insulating film 28 provided on an upper surface of upper case 11.

Negative electrode terminal portion 42 and negative electrode external terminal portion 4 are connected to each other through second conductive member 22. Second conductive member 22 is provided not to enter the expansion allowable space which will be described later. Second conductive member 22 is provided on the outside of exterior film 36 on one side in longitudinal direction DR1.

Second conductive member 22 includes a first portion 221 and a second portion 222. First portion 221 is substantially in a shape of a plate and welded to a lower surface of negative electrode terminal portion 42. Second portion 222 is provided to extend upward. A tip end side of second portion 222 passes through upper case 11 of casing 10 and is connected to negative electrode external terminal portion 4.

Second conductive member 22 and casing 10 are isolated from each other by insulating film 27 provided on the inner surface of casing 10, an insulating member 62 provided around a part of second portion 222 that passes through upper case 11, and insulating film 28 provided on the upper surface of upper case 11.

Insulating member 25 is provided in casing 10 on one side in longitudinal direction DR1. Insulating member 25 is filled to reach power storage module 20 from a sidewall of casing 10 located on one side in longitudinal direction DR1. Insulating member 25 is, for example, an insulating resin member. Insulating member 25 is thermally conductive to some extent.

Exposed portion 50 of positive electrode current collection plate 37, exposed portion 51 of negative electrode current collection plate 38, connection member 33, and at least a part of first conductive member 21 and second conductive member 22 are embedded in insulating member 25.

Exposed portions 50 and 51, connection member 33, and first conductive member 21 and second conductive member 22 are composed of a metal material. Therefore, when power storage module 20 generates heat due to charging and discharging, heat in power storage module 20 can conduct to insulating member 25. Since insulating member 25 is in contact with the sidewall of casing 10 located on one side in longitudinal direction DR1, heat that conducts to insulating member 25 can be radiated from the sidewall.

As shown in Fig. 4, upper case 11 includes an upper wall portion 111 and a peripheral wall portion 112. Peripheral wall portion 112 is provided to extend downward from a periphery of upper wall portion 111.

Upper wall portion 111 includes a central portion 111a and a peripheral portion 111b that surrounds central portion 111a. Upper wall portion 111 is warped such that central portion 111a comes closer to a bottom wall portion 121 of lower case 12. More specifically, central portion 111a is located below peripheral portion 111b such that power storage module 20 can lie between the central portions. Peripheral portion 111b is curved upward toward the periphery of upper wall portion 111.

Lower case 12 includes bottom wall portion 121 and a peripheral wall portion 122. Peripheral wall portion 122 is provided to extend upward from a periphery of bottom wall portion 121.

Bottom wall portion 121 includes a central portion 121a and a peripheral portion 121b that surrounds central portion 121a. Bottom wall portion 121 is warped such that central portion 121a comes closer to upper wall portion 111 of upper case 11. More specifically, central portion 121a is located above peripheral portion 121b such that power storage module 20 lies between the central portions. Peripheral portion 121b is curved downward toward the periphery of bottom wall portion 121.

Upper case 11 and lower case 12 are fixed with a tip end side of peripheral wall portion 122 of lower case 12 being pressed into the inside on a lower end side of peripheral wall portion 112 of upper case 11. In this state, power storage module 20 is restrained in direction of stack DR3 (an upward/downward direction) by central portion 111a of upper wall portion 111 and central portion 121a of bottom wall portion 121.

A sealing member such as a gasket may be arranged between the tip end side of peripheral wall portion 122 of lower case 12 and the lower end side of peripheral wall portion 112 of upper case 11.

Each of power storage cells 30 includes an expansion portion 363. Expansion portion 363 is provided as being expandable. When gas is generated in the inside of exterior film 36 due to heat generation or deterioration of electrode assembly 35, expansion portion 363 expands by being filled with such gas.

Exterior film 36 is provided with expansion portion 363. Expansion portion 363 is formed by folding back an excess portion of exterior film 36. More specifically, expansion portion 363 is formed by folding back a part of exterior film 36 that largely protrudes from electrode assembly 35 in short-side direction DR2 such that a bonded tip end side faces inward. The construction of expansion portion 363 can thus be simplified. Expansion portion 363 is provided on the outside of electrode assembly 35 in a direction different from the direction of protrusion from exterior film 36, of positive electrode current collection plate 37 and negative electrode current collection plate 38 described above.

Specifically, expansion portion 363 is provided on the outside of electrode assembly 35 in short-side direction DR2. Expansion portion 363 is provided, for example, from one end to the other end of exterior film 36 in longitudinal direction DR1. A large area of expansion portion 363 can thus be secured. When gas is generated, a large amount of gas can be stored in expansion portion 363.

Power storage module 20 is restrained in direction of stack DR3 (upward/downward direction) by central portion 111a of upper wall portion 111 and central portion 121a of bottom wall portion 121 as described above. Therefore, when gas is generated in the inside of exterior film 36, this gas readily moves toward expansion portion 363.

Peripheral wall portion 112 of upper case 11 and peripheral wall portion 122 of lower case 12 are arranged at a distance from electrode assembly 35 in short-side direction DR2, so that an expansion allowable space S where expansion of expansion portion 363 is allowed is provided between casing 10 and power storage module 20. Expansion allowable space S is located on the outside of electrode assembly 35 in short-side direction DR2 in the plan view.

Fig. 5 is a schematic cross-sectional view showing a state in which the expansion portion expands in the power storage according to the embodiment. A state that expansion portion 363 expands will be described with reference to Fig. 5.

As shown in Fig. 5, when gas is generated in the inside of exterior film 36 due to deterioration or heat generation of electrode assembly 35, expansion portion 363 expands. Since expansion allowable space S is provided between casing 10 and power storage module 20 as described above, interference between casing 10 and expansion portion 363 that expands can be suppressed. Consequently, external application of an excessive pressure to expansion portion 363 is suppressed and break of exterior film 36 can be suppressed.

Since the first conductive member and the second conductive member do not enter expansion allowable space S as described above, interference between expansion portion 363 and the first and second conductive members at the time of expansion of expansion portion 363 can be suppressed. Break of exterior film 36 can thus further be suppressed.

Expansion allowable space S is provided on the outside of electrode assembly 35 in short-side direction DR2, and provided from one end to the other end of casing 10 in longitudinal direction DR1. Therefore, large expansion allowable space S can be secured. Thus, even when a large amount of gas is generated, interference between casing 10 and expansion portion 363 can be suppressed and break of exterior film 36 can be suppressed.

An example in which both of positive electrode current collection plate 37 and negative electrode current collection plate 38 protrude outward from exterior film 36 on one side in longitudinal direction DR1 is illustrated and described in the embodiment above. Without being limited as such, positive electrode current collection plate 37 may protrude outward from exterior film 36 on one side in longitudinal direction DR1 and negative electrode current collection plate 38 may protrude outward from exterior film 36 on the other side in longitudinal direction DR1.

Both of positive electrode current collection plate 37 and negative electrode current collection plate 38 may protrude outward from exterior film 36 on one side in short-side direction DR2. Alternatively, positive electrode current collection plate 37 may protrude outward from exterior film 36 on one side in short-side direction DR2 and negative electrode current collection plate 38 may protrude outward from exterior film 36 on the other side in short-side direction DR2. In this case, expansion portion 363 is provided on the outside of electrode assembly 35 in longitudinal direction DR1 and expansion allowable space S is also provided on the outside of electrode assembly 35 in longitudinal direction DR1 in the plan view.

An example in which a power storage cell included in power storage module 20 is a laminate-type battery in which an electrolyte solution and electrode assembly 35 are accommodated in the inside of an exterior film is illustrated and described in the embodiment above. Without being limited as such, the power storage cell may be a laminate-type solid-state battery in which an electrolyte solution is not accommodated in the inside of the exterior film but a solid electrolyte is employed.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. A power storage (100) comprising:
a power storage module (20) in which power storage cells (30) are stacked in a direction of stack; and
a casing (10) in which the power storage module (20) is accommodated, wherein
each of the power storage cells (30) includes an electrode assembly, an exterior film (36) with which the electrode assembly is sealed, and a positive electrode lead (37) and a negative electrode lead (38) that are connected to the electrode assembly and protrude from the exterior film (36),
the exterior film (36) includes an expansion portion (363) on outside of the electrode assembly in a direction different from a direction of protrusion of the positive electrode lead (37) and the negative electrode lead (38) from the exterior film (36), the expansion portion (363) being expandable when gas is generated in inside of the exterior film (36), and
an expansion allowable space (S) where expansion of the expansion portion (363) is allowed is provided between the casing (10) and the power storage module (20).

2. The power storage (100) according to claim 1, wherein
the exterior film (36) is in a rectangular shape including a long side portion (361) and a short side portion (362) in a plan view,
the positive electrode lead (37) and the negative electrode lead (38) protrude from the short side portion (362) along a longitudinal direction of the exterior film (36),
the expansion portion (363) is provided on the outside of the electrode assembly in a short-side direction of the exterior film (36), and
the expansion allowable space (S) is located on the outside of the electrode assembly in the short-side direction in the plan view.

3. The power storage (100) according to claim 1 or 2, wherein
the power storage module (20) includes a positive electrode terminal portion (41) implemented by any of positive electrode leads (37) included in the power storage cells (30) and a negative electrode terminal portion (42) implemented by any of negative electrode leads (38) included in the power storage cells (30),
the power storage further comprises:
a positive electrode external terminal portion (3) and a negative electrode external terminal portion (4) provided outside the casing (10); and
a first conductive member (21) and a second conductive member (22), the first conductive member (21) connecting the positive electrode external terminal portion (3) and the positive electrode terminal portion (41) to each other, the second conductive member (22) connecting the negative electrode external terminal portion (4) and the negative electrode terminal portion (42) to each other, and
the first conductive member (21) and the second conductive member (22) are provided not to enter the expansion allowable space (S).

4. The power storage (100) according to any one of claims 1 to 3, wherein
the expansion portion (363) is formed by folding back an excess portion of the exterior film (36).
